# EUROPEAN PATENT SPECIFICATION

(11) **EP 3 114 339 B1**
(45) Date of publication and mention of the grant of the patent: **01.05.2019**
(21) Application number: 15758607.4
(22) Date of filing: 26.02.2015
(51) Int. Cl.: F02D 41/00, F02D 13/02, F02D 13/06, F02D 17/00

(54) **COMBUSTION ENGINE AND METHOD FOR CONTROLLING A COMBUSTION ENGINE DURING CYLINDER DEACTIVATION**
BRENNKRAFTMASCHINE UND VERFAHREN ZUR STEUERUNG EINES VERBRENNUNGSMOTORS WÄHREND EINER ZYLINDERABSCHALTUNG
MOTEUR À COMBUSTION ET PROCÉDÉ POUR COMMANDER UN MOTEUR À COMBUSTION PENDANT UNE DÉSACTIVATION DE CYLINDRE

(30) Priority: 07.03.2014 SE 1450259
(43) Date of publication of application: 11.01.2017
(73) Proprietor: Scania CV AB, 151 87 Södertälje (SE)
(72) Inventor: OLOFSSON, Eric, 120 68 Stockholm (SE); STENLÅÅS, Ola, 151 48 Södertälje (SE); LINDERYD, Johan, 144 62 Rönninge (SE); DAHL, Andreas, 611 44 Nyköping (SE); SARBY, Håkan, 141 42 Huddinge (SE)
(74) Representative: Scania CV AB
(86) International application number: PCT/SE2015/050214
(87) International publication number: WO 2015/133960

(56) References cited:
- DE-A1-102012 012 322
- FR-A1- 2 907 168
- FR-A1- 2 907 168
- JP-A- S60 150 406
- US-A- 4 499 870
- US-A1- 2005 022 755
- US-A1- 2005 205 045
- US-A1- 2009 013 669
- US-B1- 6 332 446
- US-B1- 6 431 154
- US-B1- 6 431 154

## Description

### BACKGROUND OF THE INVENTION AND PRIOR ART

The present invention relates to an internal combustion engine, a vehicle that comprises such an internal combustion engine, and a method to control an internal combustion engine according to the appended claims.

In some operating modes, such as at a low load and a low engine speed in internal combustion engines of four-stroke and diesel type, it is desirable to shut off the fuel supply to some of the internal combustion engine's cylinders, with the objective of reducing the fuel consumption and thus reducing the environmental impact. The engine's after treatment system for exhausts will, however, be cooled by the air passing through those cylinders where the fuel supply has been shut off. The cooling down of the after treatment system arises because inlet air, which is supplied to the deactivated cylinders through the inlet valves, passes through the cylinders' combustion chambers, and further through the exhaust valves with no combustion. As a result, the temperature of the inlet air will remain relatively low as it is transported further to the after-treatment system, which results in the inlet air cooling down the after-treatment system.

In order for the aftertreatment system to be able to after-treat the internal combustion engine's exhausts in a satisfactory manner, and thus to reduce emissions in the exhausts, the after-treatment system must achieve an operating temperature in the range of 300-600 °C.

One problem that also arises when one or several cylinders are deactivated, and the other cylinders are activated through compression, fuel supply and expansion, is that vibrations arise in the internal combustion engine as a consequence of reduced frequency of ignition pulses in the engine and that torque pulses from the pressure in the deactivated cylinders become lower. At cylinder deactivation of, for example, 3 of 6 cylinders in a six cylinder engine, vibrations arise to the order of 1.5, which is perceived as disrupting by the driver and passengers in a vehicle operated by the internal combustion engine. If only the fuel is throttled to the deactivated cylinders, no change in the mass flow or exhaust temperature is achieved. This applies provided that fuel to the active cylinders is doubled, that is to say the load for the engine is kept constant.

In order to reduce the mass flow and increase the exhaust temperature, the exhaust and inlet valves may be closed in deactivated cylinders. The pressure in the deactivated cylinders then gives rise to a torque pulse per revolution per cylinder, until the pressure becomes so low in these cylinders that no significant torque is obtained from the compression pressure. The pressure in deactivated cylinders becomes low because of leakage in the cylinder. This leads to even greater vibration problems, and oil may be sucked up from the crankcase, as in parts of the engine cycle a negative pressure in the lower part of the stroke arises in the deactivated cylinders, after a certain time following deactivation.

The vibrations may be reduced if either the exhaust or the inlet valves are kept closed, and the active valves constitute both the exhaust and inlet opening. Torque pulses will then be obtained from the compression/expansion pressure in the deactivated cylinders. This results in largely the same vibration problem as only shutting off the fuel to the deactivated cylinders. Additionally, a nearly halved mass flow to the exhaust after treatment results.

The compression/expansion pressure in the deactivated cylinders reduces vibrations, since they partly cancel orders on a lower level than the ignition frequency. Ignition frequency, as used herein, means ignition frequency without cylinder deactivation.

By controlling the exhaust or inlet valves in the deactivated cylinders, so that they are kept closed, the engine's after treatment system for exhausts are cooled down, since no air is supplied to the deactivated cylinders, and no air is forwarded to the engine's after treatment system from the deactivated cylinders.

The deactivation with closed exhaust or inlet valves may also apply while driving a vehicle in the event of such load cases, wherein the exhaust temperature becomes so low that the exhaust treatment system cools to such an extent that it falls below the critical temperature, where its conversion ceases wholly or partly. Accordingly, this prevents exhausts from passing through the exhaust treatment system completely untreated during a part of the vehicle's driving cycle.

In order to try and avoid cooling of the after treatment system while trying to equalize the vibrations, a zero flow of air through the deactivated cylinders may be created. Thus, air will be prevented from passing through the deactivated cylinders, and further to the after treatment system. Accordingly, the aftertreatment system will not be cooled. The zero flow must be achieved efficiently, so that pressure pulses, noise and mechanical stress is minimised or eliminated.

The document US 6431154 B1 shows how the air flow is reduced through deactivation of cylinders in a internal combustion engine, with the objective of avoiding emissions and vibrations.

Documents FR290716, US2009/0013669 and US2005/0022755 are also relevant to the deactivation of cylinders.

### SUMMARY OF THE INVENTION

Despite prior art solutions, there is a need to further develop an internal combustion engine, in which vibrations are equalized as a result of the deactivation of cylinders. There is also a need to further develop an internal combustion engine, which saves fuel through deactivation of one or several cylinders, and in which the internal combustion engine's cooling of the exhaust treatment system is avoided at deactivation of one or several cylinders, and wherein an effective zero flow of gases through the deactivated cylinders is achieved.

The objective of the present invention is thus to provide an internal combustion engine, at which an efficient zero flow of gas is achieved through deactivation of cylinders.

Another objective of the invention is to provide an internal combustion engine, in which vibrations are effectively equalized as a consequence of the deactivation of cylinders.

Another objective of the invention is to provide an internal combustion engine, which avoids cooling the exhaust treatment system at deactivation of one or several cylinders.

Another objective of the invention is to avoid that oil may be sucked up from the crankcase, where a negative pressure arises at the lower part of the stroke in the deactivated cylinders, after a certain time following deactivation.

Another objective of the invention is to provide an internal combustion engine, which saves fuel through deactivation of one or several cylinders.

These objectives are achieved with an internal combustion engine of the type specified at the beginning, which is characterised by the features specified in claim 1.

In such an internal combustion engine an efficient zero flow of gas through the deactivated cylinders is achieved. Such an internal combustion engine will also save fuel, avoid that cooling of the exhaust treatment system occurs, and ensure that vibrations as a consequence of the deactivation of the cylinders are effectively equalized. By controlling the first and the second valve in such a way that they alternately open and close the same channel, connected with the cylinder, a pressure pulse may be avoided at the shifting between the closing and the opening of the channel. Such a pressure pulse could give rise to noise and vibrations in the internal combustion engine. Since the first and the second valve are controlled in such a way that they alternately open and close the same channel, no extremely high accelerations and decelerations of the valves arise, which entails that stress on the valves is limited, which increases the life of the valves.

According to one embodiment, the first channel is connected to an inlet system arranged for the engine, and the second channel is connected to an exhaust system arranged in the engine. Accordingly, the engine's inlet valves will alternately open and close the inlet channel in the deactivated cylinders, while the exhaust valves keep the exhaust channel to the deactivated cylinders closed.

According to another embodiment, the first channel is connected to an exhaust system arranged for the engine, and the second channel is connected to an inlet system arranged in the engine. Thus, the engine's exhaust valves will alternately open and close the exhaust channel in the deactivated cylinders, while the inlet valves keep the inlet channel to the deactivated cylinders closed.

By controlling the internal combustion engine in such a way that the air mass sucked into the second cylinder is reduced in relation to the air mass sucked into the first cylinder, the pressure in the active cylinders will decrease, and be adapted to a pressure level which substantially corresponds to the pressure in the deactivated cylinders. Accordingly, the vibrations will be effectively equalized. The engine's normal operating state relates to operation at normal load, whereas the opening and closing times for the valves are set at a benchmark position.

At cylinder deactivation of, for example, 3 of 6 cylinders in a straight six cylinder engine, vibrations to the order of 1.5 arise. With the invention, the vibrations are altered to the order of 3 by maintaining the compression and expansion pressure in the deactivated cylinders. By controlling the internal combustion engine in such a way that the air volume sucked into the active cylinders decreases in relation to a normal operating state, the difference in the torque pulses between the active and the deactivated cylinders decreases. The invention is especially efficient for equalizing the low frequency vibrations arising at idling of the engine.

In order to minimise excitation of vibrations to the order of 1.5, the sum of the torque pulses obtained from the pressure in the cylinders must not contain the order of 1.5. In order to achieve this to the extent possible, the differences between the torque pulses from the deactivated and the active cylinders, respectively, are reduced by reducing the compression pressure in the active cylinders, while the pressure in the deactivated cylinders is potentially increased. The magnitude of the cylinder pressure reduction required in the active cylinders becomes load-dependent, and is advantageously controlled in such a way that vibrations for idling load are compensated. The torque pulses from the active cylinders are a function of the lever constituted by the crank rod, the crankshaft web of the crankshaft and the crankshaft angle, as well as the cylinder pressure. The size of the lever is fixed by the geometry of the crank rod and the crankshaft web, and may not be impacted, which is why the cylinder pressure is used to optimise the torque pulses. The area around 20 degrees before and after the piston's top dead centre is particularly important, since the combination of a high cylinder pressure and a lever results in high torque.

The above objectives are achieved also with a vehicle of the type specified at the beginning. A vehicle with such an internal combustion engine will save fuel, avoid that cooling of the exhaust treatment system occurs, and ensure that vibrations as a consequence of the deactivation of the cylinders are effectively equalized. By controlling the first and the second valve in such a way that they alternately open and close the same channel, connected with the cylinder, a pressure pulse may be avoided at the shifting between the closing and the opening of the channel. Such a pressure pulse could give rise to noise and vibrations in the internal combustion engine. The comfort level for the individuals travelling in the vehicle improves, since the vibrations and noise in the vehicle decrease.

The above objectives are achieved also with a method to control an internal combustion engine of the type specified at the beginning.

The method according to the present invention means that an efficient zero flow of gas through the deactivated cylinders is achieved. The method also entails that the internal combustion engine will be able to save fuel, by avoiding that cooling of the exhaust treatment system occurs, and ensuring that vibrations as a consequence of the deactivation of the cylinders are effectively equalized. By controlling the first and the second valve in such a way that they alternately open and close the same channel, connected with the cylinder, a pressure pulse may be avoided at the shifting between the closing and the opening of the channel. Such a pressure pulse could give rise to noise and vibrations in the internal combustion engine. Since the first and the second valve are controlled in such a way that they alternately open and close the same channel, no extremely high accelerations and decelerations of the valves arise, which entails that stress on the valves is limited, which increases the life of the valves.

According to one embodiment, the first channel is connected to an inlet system arranged for the engine, and the second channel is connected to an exhaust system arranged in the engine. Accordingly, the engine's inlet valves will alternately open and close the inlet channel in the deactivated cylinders, while the exhaust valves keep the exhaust channel to the deactivated cylinders closed.

According to another embodiment, the first channel is connected to an exhaust system arranged for the engine, and the second channel is connected to an inlet system arranged in the engine. Thus, the engine's exhaust valves will alternately open and close the exhaust channel in the deactivated cylinders, while the inlet valves keep the inlet channel to the deactivated cylinders closed.

According to the invention, fuel is supplied only to some of the engine's cylinders, and the air mass sucked into the second cylinder decreases in relation to the air mass sucked into the first cylinder. The method entails that fuel is saved, that cooling of the exhaust treatment system is avoided, and ensures that vibrations as a consequence of the deactivation of the cylinders are effectively equalized.

According to another embodiment, the internal combustion engine is operated with diesel. Since an engine fuelled by diesel works with compression ignition, cylinders, combustion chamber, pistons and valves may be designed at the same time as control of the valve times and a suitable geometry of the components interacting in the engine may be provided, so that a functioning interaction between pistons and valves is achieved.

Since substantially no negative pressure develops in the deactivated cylinders, no oil pumping from the crankcase to the combustion chamber in the cylinders, above the pistons, occurs.

According to the invention, the internal combustion engine comprises a crankshaft, preferably a number of cylinders where each one has a forwards and backwards moving piston assembled inside, and is connected to the crankshaft for movement forwards and backwards, as well as a number of inlet and exhaust valves of disc type, in order to allow inlet air to come into the cylinders and to allow exhausts to leave the cylinders.

The inlet and exhaust valves are each controlled and operated by a valve control means, which in turn is operated by the crankshaft via a control shaft. At the respective valve control means there is a control device, which controls the valve control means, and thus the opening and closing times of the valves. The control device is preferably connected to a control unit, which controls the control device to a state adapted to the internal combustion engine's operating mode. The control device also controls a fuel injection device, delivering fuel to the cylinders. Preferably the valve control means consist of camshafts, but it is possible to use other types of valve control means, for example hydraulic, pneumatic or electric valve control means.

When the engine and the vehicle according to the present invention are set in an operating mode, wherein some cylinders must be deactivated, the control unit will shut off or reduce fuel to the cylinders to be deactivated and control the control device for the valve control means, so that there is no net flow of air through the deactivated cylinders.

The internal combustion engine according to the invention preferably has separate valve control means for the respective valves. In one operating mode of the internal combustion engine, corresponding to normal load, the control device is controlled in such a way that the exhaust valves open at the bottom dead centre for completion of the expansion stroke, and so that they close at the top dead centre to begin the inlet stroke, and in such a way that the inlet valves open at the top dead centre when the inlet stroke begins, and close at the bottom dead centre when the compression stroke begins.

Other advantages of the invention are set out in the detailed description below.

### BRIEF DESCRIPTION OF THE DRAWINGS

Below is a description, as an example, of preferred embodiments of the invention, with reference to the enclosed drawings, on which:
Fig. 1 is a side view of a schematically displayed vehicle, with a internal combustion engine according to the present invention,
Fig. 2 is a top view of a schematically displayed internal combustion engine according to the present invention,
Fig. 3 is a cross section view through the line II-II in Fig. 2,
Fig. 4 relates to a detailed top view of a first and second cylinder.
Fig. 5a-d shows a diagram of torque in the cylinders of an internal combustion engine according to the present invention
Fig. 6 shows a diagram of the pressure in a cylinder of an internal combustion engine according to the present invention, and
Fig. 7 shows a flow chart of a method to control an internal combustion engine according to the present invention.

### DETAILED DESCRIPTION OF PREFERRED EMBODIMENTS OF THE INVENTION

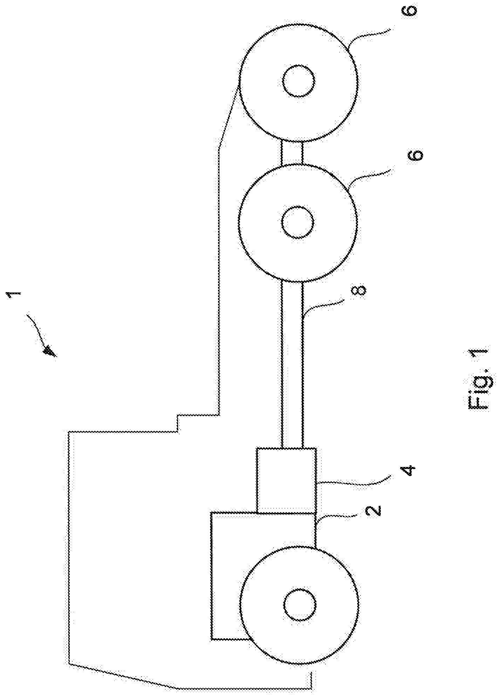

Fig. 1 shows a vehicle 1 in a schematic side view, which vehicle 1 is equipped with an internal combustion engine 2 according to the present invention. The internal combustion engine 2 is preferably a diesel engine. The vehicle 1 is also equipped with a gearbox 4 connected to an internal combustion engine 2, driving the driving wheels 6 of the vehicle 1 via the gearbox 4, and a propeller shaft 8.

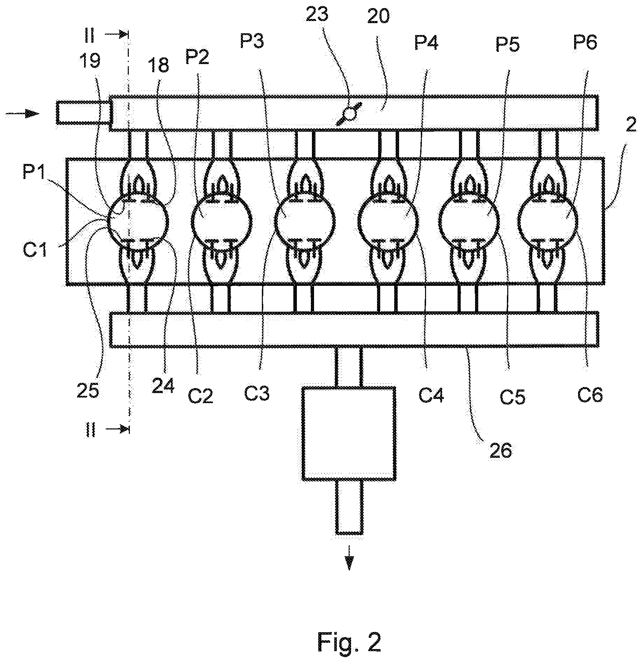

The internal combustion engine 2 according to the invention will be described below with reference to Figs. 2, 3 and 4. Fig. 2 shows a schematic top view of a straight internal combustion engine 2 of four-stroke type. The embodiment relates to a diesel engine fuelled by diesel fuel. The internal combustion engine 2 comprises at least one first and one second cylinder C1, C4. The internal combustion engine 2, according to the embodiment in Fig. 2 comprises six cylinders C1 - C6, arranged in a row, where one piston P1 - P6 is arranged in each cylinder C1 - C6 of the engine 2.

At least one first valve 18 is arranged in the first cylinder C1, which first valve 18 according to the embodiment is an inlet valve connected to an inlet system 20. At least one second valve 19, in the form of an inlet valve, is arranged in the first cylinder C1, which second inlet valve 19 is connected to the inlet system 20. At least one third valve 24, in the form of an exhaust valve, is arranged in the first cylinder C1, which third valve 24 is connected to an exhaust system 26. At least one fourth valve 25, in the form of an exhaust valve, is arranged in the first cylinder C1, which fourth valve 25 is connected to the exhaust system 26. Similarly, valves are arranged in the other cylinders C2-C6. However, it is possible to arrange two inlet valves and an exhaust valve in a cylinder, or to arrange an inlet valve and two exhaust valves in the cylinder.

According to one embodiment, a damper 23 may be arranged in the inlet system 20, which damper 23 may be set so that it limits the air supply to the cylinders C4 - C6 of the engine 2.

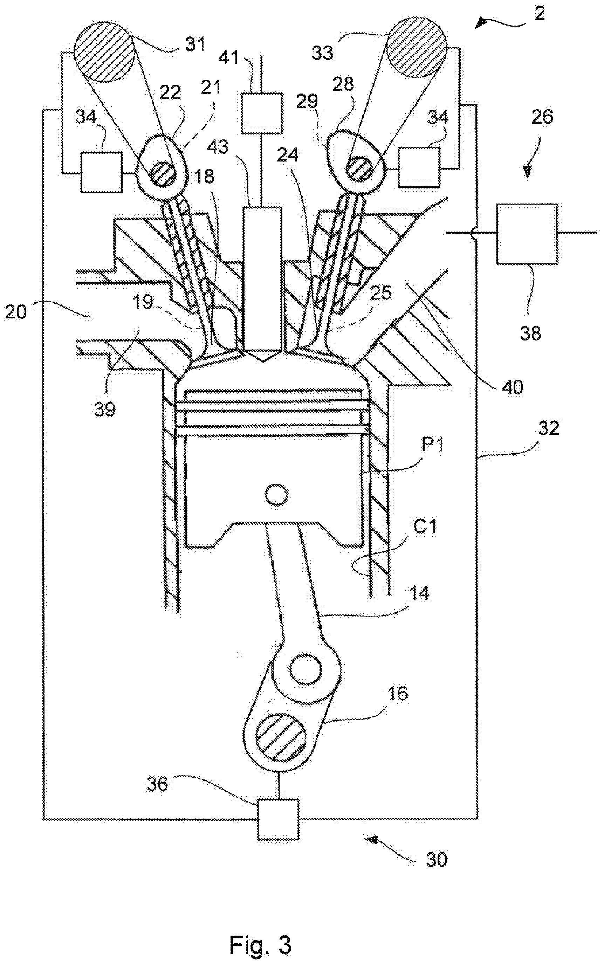

Fig. 3 shows a cross section view of the internal combustion engine 2 through the line II-II in Fig. 2. The piston P1 is connected via a crank rod 14 to a crankshaft 16, which at rotation moves the piston P1 forwards and backwards in the cylinder C1. At least one first and one second valve control means 21, 22 are arranged to control the first and the second valve 18, 19. At least one third and one fourth valve control means 28, 29 are arranged to control the third and the fourth valves 24, 25. A first and a second channel 39, 40, leading gases between the inlet system 20, the cylinder C1 and the exhaust system 26, are connected with the first cylinder C1. According to the embodiment displayed, the valve control means consist of camshafts 21, 22, 28, 29, but it is possible to use other types of valve control means, for example hydraulic, pneumatic or electric valve control means.

The crankshaft 16 is arranged to control each camshaft 21, 22, 28, 29 via a first and a second control shaft 31, 33. At least one control device 34 is arranged between the crankshaft 16, and each control shaft 31, 33 and camshaft 21, 22, 28, 29, respectively, in order to control the first and the second valves 18, 19, and the third and fourth valves 24, 25 in such a way that no air is supplied to the exhaust system 26 from the first cylinder C1 when the first piston P1 moves backwards and forwards in the first cylinder C1. The control device 34 may also function as a deactivation device to control the valves 18, 19, 24, 25 to a closed state.

The control device 34 is also arranged to control the internal combustion engine 2 in such a way that the air mass sucked into the second cylinder C4 decreases in relation to the air mass sucked into the first cylinder C1. The engine's 2 normal operating state relates to operation at normal load, wherein the opening and closing times for the valves 18, 19, 24, 25 are set at a benchmark position. In an operating mode of the internal combustion engine 2, corresponding to a normal state, the control device 34 is controlled in such a way that the valves 24, 25 open at the bottom dead centre BDC for completion of the expansion stroke, and so that they close at the top dead centre TDC to begin the inlet stroke, and in such a way that the valves 18, 19 open at the top dead centre TDC when the inlet stroke begins, and close at the bottom dead centre when the compression stroke begins. The valves 24, 25 then function as exhaust valves, and the valves 18, 19 function as inlet valves.

A camshaft control 30 is arranged in the internal combustion engine 2 according to the present invention. The crankshaft 16 controls each camshaft 21, 22, 28, 29 via the control shafts 31, 33 and a camshaft transmission 32. At least one control device 34 is arranged between the respective control shafts 31, 33 and the camshaft 21, 22, 28, 29, respectively, so that the valves 18, 19, 24, 25 may be controlled to a state where the valves 18, 19, 24, 25 are controlled in such a way that no air is supplied to the exhaust system 26 when the pistons P1 - P3 move backwards and forwards in the cylinders C1 - C3. Preferably, a control device 34 is arranged for each camshaft 21, 22, 28, 29. A control device 36 receives signals from a number of different sensors (not shown), such as absolute pressure in the inlet manifold, charge air temperature, mass airflow, throttle position, engine speed, engine load. The control unit 36 impacts the control devices 34, which adjust the opening and closing times of the valves 18, 19, 24, 25 in relation to the crankshaft's 16 angular position.

A fuel pump 41 is connected to an injection device 43, arranged in each cylinder C1 - C6 for injection of fuel into the cylinder C1 - C6.

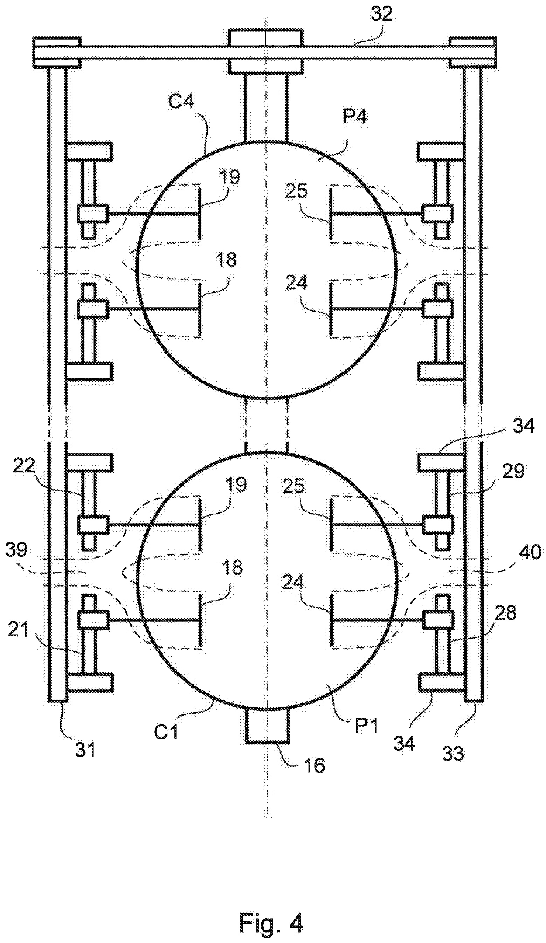

Fig. 4 shows a detailed top view of a first and second cylinder C1, C4. A first piston P1 is arranged in the first cylinder C1, and a second piston P4 is arranged in the second cylinder C4. The first and the second channel 39, 40 are connected with the first cylinder C1. The first and the second valves 18, 19 are arranged to open and close the connection between the first channel 39 and the first cylinder C1. The third and the fourth valves 24, 25 are arranged to open and close the connection between the second channel 40 and the first cylinder C1. A first camshaft 21 is arranged to control the first valve 18 to open at a bottom dead centre BDC for the piston P1 in the first cylinder C1, between an expansion stroke and an exhaust stroke, and to close at a top dead centre TDC for the piston P1 in the first cylinder C1, between an exhaust stroke and an inlet stroke. A second camshaft 22 is arranged to control the second valve 19 to open when the first valve 18 closes, and to close at the bottom dead centre BDC, between the inlet stroke and the compression stroke. A deactivation device is arranged to control the third and the fourth valves 24, 25, so that they remain closed during all the strokes of the engine 2.

The first channel 39 is connected to an inlet system 20 arranged for the engine 2, and the second channel 40 is connected to an exhaust system 26 arranged in the engine 2. Alternatively, the first channel 39 may be connected to an exhaust system 26 arranged for the engine 2, and the second channel 40 may be connected to an inlet system 20 arranged in the engine 2.

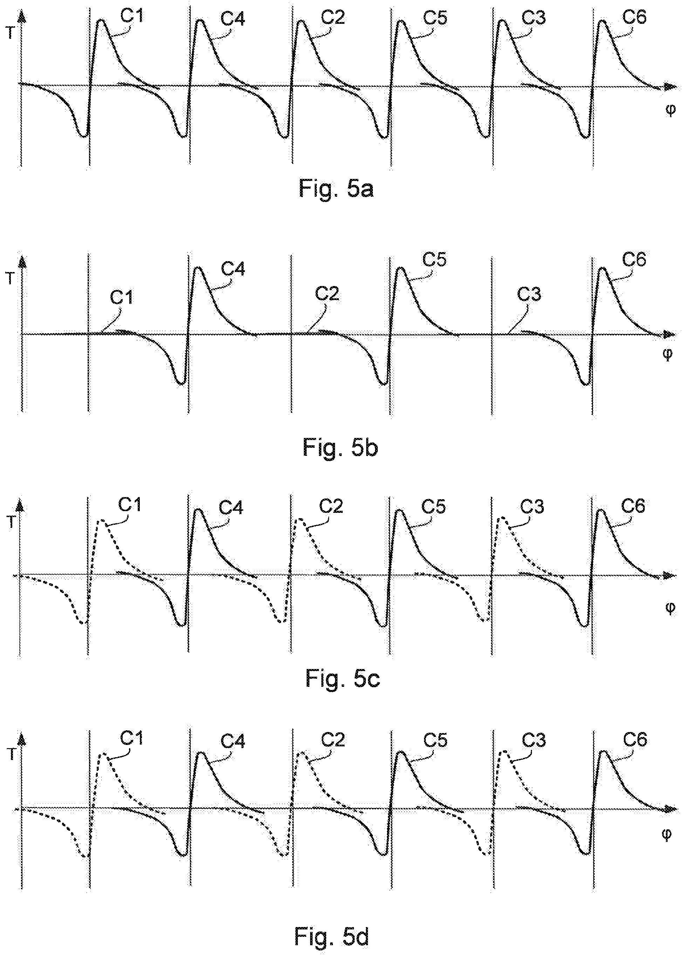

Fig. 5 a-d show graphs of torque as a function of the crankshaft angle in an internal combustion engine 2 with six cylinders C1 - C6. The Y-axis represents the torque T from the cylinders C1 - C6. The X-axis represents the crank angle state ϕ of the crankshaft 16, and thus the movement of the piston P1. Each positive torque pulse in Fig. 5a represents an expansion for each cylinder C1 - C6. Each negative torque pulse represents the compression for each cylinder C1 - C6.

Fig. 5b three of the engine's six cylinders C1 - C3 have been deactivated, while the remaining three cylinders C4 - C6 are still activated. All the valves in the three deactivated cylinders C1 - C3 are closed, and the cylinders C1 - C3 have successively been emptied of air. One problem that arises when one or several cylinders C1 - C3 are deactivated, and the other cylinders C4 - C6 are activated, is that vibrations arise in the internal combustion engine 2 as a consequence of a reduced frequency of expansions in the engine 2, so that no torque pulses are obtained from the pressure in the deactivated cylinders C1 - C3.

Fig. 5c the vibrations have been reduced to some extent by control of the internal combustion engine 2, so that a zero flow of air is created over the deactivated cylinders C1 - C3, so that the air enclosed in the deactivated cylinders C1 - C3 will be compressed or expanded. Thus, the order of 1.5 is reduced in favour of the order of 3.
Fig. 5c shows, however, that the positive torque pulse in the active cylinders C4 -C6 is higher than the positive torque pulse, which builds up in the deactivated cylinders C1 - C3. This torque difference will cause vibrations in the engine 2, which become particularly disruptive when the engine 2 is operated at idling speed. The vibrations are generated through lateral forces on the pistons P1 - P3 and the cylinder C1 - C3, and in the bearings for the crankshaft 16.

By reducing, according to the invention, the air mass sucked into the active cylinders C4 - C6 in relation to the air mass sucked into the deactivated cylinders C1 - C3, the torque T in the active cylinders C4 - C6 will decrease, and be adapted to a pressure level which substantially corresponds to the torque T in the deactivated cylinders C1 - C3, as shown by the graph in Fig. 5d. Accordingly, the vibrations will be effectively equalized.

At cylinder deactivation of, for example, 3 of 6 cylinders C1 - C3 in the straight six-cylinder engine in the example embodiment above, vibrations in the order of 1.5 arise. With the invention, the vibrations are reduced to the order of 3, by maintaining the compression and expansion pressure in the deactivated cylinders C1 - C3. By controlling the internal combustion engine 2 in such a way that the air mass sucked in decreases in relation to the air mass sucked into the deactivated cylinders C1 - C3, the mass flow of air to the active cylinders C4 - C6 decreases. According to one embodiment, the inlet valves 19 in the active cylinders C4 - C6 are controlled to reduce the air volume sucked into the active cylinders C4 -C6. This is achieved through controlling the valves 18, 19, which are connected with the inlet channel in the active cylinders C4- C6, to close before or after the time when the valves 18, 19 close at normal operation of the internal combustion engine 2.

The graphs in Fig. 5 represents an internal combustion engine 2 of four-stroke type, which entails that the crankshaft 16, and therefore each piston P1 - P6, will have moved the equivalent of 720° when all four strokes have been completed.

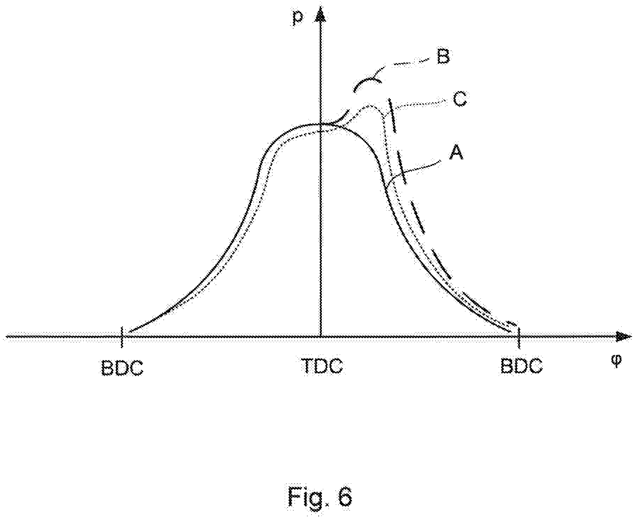

Fig. 6 shows graphs of cylinder pressure as a function of the crankshaft angle in a internal combustion engine 2. The Y-axis represents the pressure p in the cylinder C1 and in the cylinder C4. The x-axis represents the crankshaft angle ϕ of the crankshaft 16, and accordingly the piston's P1 position in the cylinder. The graph A in Fig. 6 shows how the pressure in the deactivated cylinder C1 varies with the crankshaft angle ϕ of the crankshaft 16. The graph B shows how the pressure in the active cylinder C4 varies with the crankshaft angle ϕ of the crankshaft 16. The graph C shows how air mass caught - and therefore the pressure - in the active cylinder C4 has been reduced, and varies with the crankshaft angle ϕ of the crankshaft 16. The additional pressure increase arising after the top dead centre TDC for the graphs B and C is attributable to the expansion at the combustion of fuel. In order to completely eliminate excitation of vibrations to the order of 1.5, the pressure in all the cylinders C1 - C6 must be identical. In order to achieve this to the extent possible, the differences between the torque pulses from the deactivated and the active cylinders C1 - C6 are reduced by reducing the compression pressure in the active cylinders C4 - C6, while the pressure in the deactivated cylinders C1 - C3 is potentially increased. The magnitude of the cylinder pressure reduction required in the active cylinders C4 - C6 becomes load-dependent, and is advantageously controlled in such a way that vibrations for idling load are compensated. The torque pulses from the active cylinders C4 - C6 are a function of the lever constituted by the crank rod 14, the crankshaft web of the crankshaft 16 and the crankshaft angle, as well as the cylinder pressure. The size of the lever is fixed by the geometry of the crank rod 14 and the crankshaft web, and may not be impacted, and accordingly the cylinder pressure is used to optimise the torque pulses. The area around 20 degrees before and after the piston's top dead centre TDC is particularly important, since the combination of a high cylinder pressure and a lever results in high torque. According to one embodiment, the valves 18, 19, which are connected to the inlet channels in the active cylinders, are controlled to reduce the air volume sucked into the active cylinders C4 -C6. This is achieved through controlling the valves 18, 19 in the active cylinders C4- C6 to close before or after the time when the valves 18, 19 close at normal operation of the internal combustion engine 2.

According to one embodiment, the inlet valves 19 in the cylinders C4 - C6 are controlled to close in the interval corresponding to 10 crankshaft degrees before the bottom dead centre BDC to 40° after the bottom dead centre BDC, preferably 15 crankshaft degrees after the bottom dead centre BDC.

According to another embodiment, the inlet valves 19 in the cylinders C4 - C6 are controlled to close in the interval corresponding to 40° after the bottom dead centre BDC to 90° after the bottom dead centre BDC, preferably 60 crankshaft degrees after the bottom dead centre BDC.

According to a third embodiment, the damper 23, arranged in the inlet system 20, is used. By setting the damper 23 so that it limits the air supply to the active cylinders C4 - C6 of the engine 2, the air volume sucked into the active cylinders C4 - C6 will decrease. The damper 23 may be used in combination with the control of the valves 18, 19 to the active cylinders C4 - C6.

In order to control the valves 18, 19, 24, 25 of the deactivated cylinders C1 - C3 in such a way that no air is supplied to the exhaust system 26 from the deactivated cylinders C1 - C3 when the pistons P1 - P3 move backwards and forwards in the deactivated cylinders C1 - C3, the first valves 18 in the deactivated cylinders C1 - C3 are controlled to open during an exhaust stroke, and the other valves 19 to open during an inlet stroke, while the third and fourth valves 24, 25 in the deactivated cylinders C1 - C3 are controlled to a closed position during all strokes.

Therefore the resulting flow to the exhaust system 26 will be zero. Since there is no net flow of air through the cylinders C1 - C3 of the internal combustion engine 2, cooling down and oxygenation of the exhaust after treatment system 38 is avoided, while no fuel is supplied to the cylinders C1 - C3. Therefore no increase of emissions from the internal combustion engine 2 occurs, while simultaneously the fuel economy is improved. Since substantially no negative pressure develops in the cylinders C1 - C3, no oil pumping from the crankcase to the cylinders C1 - C3 takes place, which reduces the oil consumption, accordingly resulting in a reduced environmental impact. In this context, it should be pointed out that it is also possible to supply fuel into the deactivated cylinders C1 - C3, while simultaneously a zero flow of air is generated in these cylinders. In this case, a combustion arises in the deactivated cylinders, contributing to a reduction of vibrations generated.

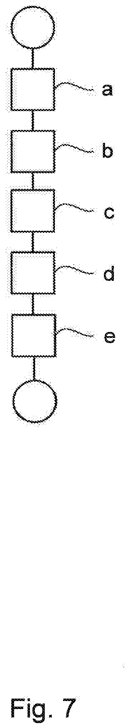

The method to control the internal combustion engine 2 according to the present invention will be described below jointly with the flow chart in Fig. 7, which method comprises the steps:
a) controlling the first valve 18 to open at a bottom dead centre BDC for the piston P1 in the first cylinder C1, between an expansion stroke and an exhaust stroke, and to close at a top dead centre TDC for the piston P1 in the first cylinder C1, between an exhaust stroke and an inlet stroke,
b) controlling the second valve 19 to open when the first valve 18 closes, and to close at the bottom dead centre BDC between the inlet stroke, and a compression stroke, and
c) controlling the third valve 24, so that it remains closed during all strokes of the engine 2.

The first valve 18 is controlled with a first camshaft 21, and the second valve 19 is controlled with a second camshaft 22, which first and second camshafts 21, 22 may be phase shifted in relation to the rotation angle of a crankshaft 16, connected with the piston P1. In step c) the third valve 24 is controlled with a deactivation device 34, connected to the third valve 24. According to one embodiment, a fourth valve 25 is arranged to open and close the connection between the second channel 40 and the first cylinder C1, and in step c the fourth valve 25 is also controlled with the deactivation device 34, which is also connected to the fourth valve 25.

According to a first embodiment, the first channel 39 is connected to an inlet system 20 arranged for the engine 2, and the second channel 40 is connected to an exhaust system 26 arranged in the engine 2. According to a second embodiment, the first channel 39 is connected to an exhaust system 26 arranged for the engine 2, and the second channel 40 is connected to an inlet system 20 arranged in the engine 2.

The method also comprises, according to one embodiment, the additional steps:
d) supplying fuel only to the second cylinder C4,
e) reducing the air mass sucked into the second cylinder C4 in relation to the air mass sucked into the first cylinder C1.

In step e) an inlet valve 18, 19 connected to the second cylinder C4 is controlled to reduce the air mass sucked into the second cylinder C4. The inlet valve 18, 19 is controlled to close before or after the point in time for closing the inlet valve 18, 19 at normal operation of the internal combustion engine 2.

In step e) the inlet valve 18, 19 is preferably controlled to reduce the air volume sucked into the second cylinder C4. This may be achieved by controlling the inlet valve 18, 19 to close before or after the point in time for closing the inlet valve 18, 19 at normal operation of the internal combustion engine 2. According to one embodiment, the inlet valve 18, 19 is controlled to close in the interval corresponding to 10 crankshaft degrees before the bottom dead centre BDC to 40° after the bottom dead centre BDC, preferably 15 crankshaft degrees after the bottom dead centre BDC. According to another embodiment, the inlet valve 18, 19 is controlled to close in the interval corresponding to 40 crankshaft degrees after the bottom dead centre BDC to 90° after the bottom dead centre BDC, preferably 60 crankshaft degrees after the bottom dead centre BDC.

Preferably the fuel supplied in step d) is diesel fuel.

The components and features specified above may, within the framework of the invention, be combined between different embodiments specified.

## Claims

1. Method to control a four stroke internal combustion engine, which internal combustion engine (2) comprises,
- at least one first and one second cylinder (C1, C4);
- a first piston (P1), arranged in the first cylinder (C1);
- a second piston (P4), arranged in the second cylinder (C4);
- a first intake channel (39) and a second exhaust channel (40) connected with the first cylinder (C1),
- a first and a second valve (18, 19), arranged to open and close the connection between the first channel (39) and the first cylinder (C1),
- a third valve (24), arranged to open and close the connection between the second channel (40) and the first cylinder (C1), wherein
the method comprises the following steps:
a) controlling the first valve (18) to open at a bottom dead centre (BDC) for the piston (P1) in the first cylinder (C1), between an expansion stroke and an exhaust stroke, and to close at a top dead centre (TDC) for the piston (P1) in the first cylinder (C1), between an exhaust stroke and an inlet stroke,
b) controlling the second valve (19) to open when the first valve (18) closes, and to close at the bottom dead centre (BDC), between the inlet stroke and a compression stroke, and
c) controlling the third valve (24) in such a way that it, and therefore the connection between the second channel (40) and the first cylinder, remains closed during all the strokes of the engine (2), wherein the method is
**characterised by** the additional steps:
d) supplying fuel only to the second cylinder (C4),
e) reducing the air mass sucked into the second cylinder (C4) in relation to the air mass sucked into the first cylinder (C1).

2. Method according to claim 1, **characterised in that** the first valve (18) is controlled with a first vale control means (21), and the second valve (19) is controlled with a second valve control means (22), which first and second valve control means (21, 22) may be phase shifted in relation to the rotation angle of a crankshaft (16), connected with the piston (P1).

3. Method according to any of claims 1 - 2, **characterised in that** in step c) the third valve (24) is controlled with a deactivation device (34), connected to the third valve (24).

4. Method according to claims 1 - 3, **characterised in that** a fourth valve (25) is arranged to open and close the connection between the second channel (40) and the first cylinder (C1), and **in that** in step c the fourth valve (25) is also controlled with the deactivation device (34), which is connected also to the fourth valve (25).

5. Method according to any of claims 1 - 3, **characterised in that** the first channel (39) is connected to an inlet system (20) arranged for the engine (2), and the second channel (40) is connected to an exhaust system (26) arranged in the engine (2).

6. Method according to any of claims 1 - 3, **characterised in that** the first channel is connected to an exhaust system (26) arranged for the engine (2), and the second channel (40) is connected to an inlet system (20) arranged in the engine (2).

7. Method according to claim 1, **characterised in that** in step e) an inlet valve (18, 19) connected to the second cylinder is controlled to reduce the air mass sucked into the second cylinder (C4).

8. Method according to claim 7, **characterised in that** the inlet valve (18, 19), connected to the second cylinder, is controlled to close before and after the point in time when the inlet valve (18, 19), connected to the second cylinder, is closed at normal operation of the internal combustion engine (2).

## Patentansprüche

1. Verfahren zum Steuern eines Viertakt-Verbrennungsmotors, wobei der Verbrennungsmotor (2) umfasst:
- mindestens einen ersten und einen zweiten Zylinder (C1, C4);
- einen ersten Kolben (P1), der in dem ersten Zylinder (C1) angeordnet ist;
- einen zweiten Kolben (P4), der in dem zweiten Zylinder (C4) angeordnet ist;
- einen ersten Einlasskanal (39) und einen zweiten Auslasskanal (40), die mit dem ersten Zylinder (C1) verbunden sind,
- ein erstes und ein zweites Ventil (18, 19), die angeordnet sind, um die Verbindung zwischen dem ersten Kanal (39) und dem ersten Zylinder (C1) zu öffnen und zu schließen,
- ein drittes Ventil (24), das angeordnet ist, um die Verbindung zwischen dem zweiten Kanal (40) und dem ersten Zylinder (C1) zu öffnen und zu schließen, wobei das Verfahren die folgenden Schritte umfasst:
a) Steuern des ersten Ventils (18), um sich an einem unteren Totpunkt (BDC) für den Kolben (P1) in dem ersten Zylinder zwischen einem Expansionstakt und einem Auslasstakt zu öffnen, und um sich an einem oberen Totpunkt (TDC) für den Kolben (P1) in dem ersten Zylinder (C1) zwischen einem Auslasstakt und einem Einlasstakt zu schließen,
b) Steuern des zweiten Ventils (19), um sich zu öffnen, wenn sich das erste Ventil (18) schließt, und um sich an dem unteren Totpunkt (BDC) zwischen dem Einlasstakt und einem Kompressionstakt zu schließen, und
c) Steuern des dritten Ventils (24), so dass es, und damit die Verbindung zwischen dem zweiten Kanal (40) und dem ersten Zylinder, während aller Takte des Motors (2) geschlossen bleibt,
wobei das Verfahren **gekennzeichnet ist durch** die zusätzlichen Schritte zum:
d) Zuführen von Kraftstoff nur zu dem zweiten Zylinder (C4),
e) Reduzieren der Luftmasse, die in den zweiten Zylinder (C4) angesaugt wird, mit Bezug auf die Luftmasse, die in den ersten Zylinder (C1) angesaugt wird.

2. Verfahren nach Anspruch 1, **dadurch gekennzeichnet, dass** das erste Ventil (18) mit einem ersten Ventilsteuermittel (21) gesteuert wird und das zweite Ventil (19) mit einem zweiten Ventilsteuermittel (22) gesteuert wird, wobei die ersten und zweiten Ventilsteuermittel (21, 22) mit Bezug auf den Drehwinkel einer Kurbelwelle (16), die mit dem Kolben (P1) verbunden ist, phasenverschoben sein können.

3. Verfahren nach einem der Ansprüche 1 bis 2, **dadurch gekennzeichnet, dass** in Schritt c) das dritte Ventil (24) mit einer Deaktivierungsvorrichtung (34) gesteuert wird, die mit dem dritten Ventil (24) verbunden ist.

4. Verfahren nach einem der Ansprüche 1 bis 3, **dadurch gekennzeichnet, dass** ein viertes Ventil (25) angeordnet ist, um die Verbindung zwischen dem zweiten Kanal (40) und dem ersten Zylinder (C1) zu öffnen und zu schließen, und dass in Schritt c das vierte Ventil (25) ebenfalls mit der Deaktivierungsvorrichtung (34) gesteuert wird, die ebenfalls mit dem vierten Ventil (25) verbunden ist.

5. Verfahren nach einem der Ansprüche 1 bis 3, **dadurch gekennzeichnet, dass** der erste Kanal (39) mit einem Einlasssystem (20) verbunden ist, das für den Motor (2) angeordnet ist, und der zweite Kanal (40) mit einem Auslasssystem (26) verbunden ist, das in dem Motor (2) angeordnet ist.

6. Verfahren nach einem der Ansprüche 1 bis 3, **dadurch gekennzeichnet, dass** der erste Kanal mit einem Auslasssystem (26) verbunden ist, das für den Motor (2) angeordnet ist, und der zweite Kanal (40) mit einem Einlasssystem (20) verbunden ist, das in dem Motor (2) angeordnet ist.

7. Verfahren nach Anspruch 1, **dadurch gekennzeichnet, dass** in Schritt e) ein Einlassventil (18, 19), das mit dem zweiten Zylinder verbunden ist, gesteuert wird, um die Luftmasse zu reduzieren, die in den zweiten Zylinder (C4) angesaugt wird.

8. Verfahren nach Anspruch 7, **dadurch gekennzeichnet, dass** das Einlassventil (18, 19), das mit dem zweiten Zylinder verbunden ist, gesteuert wird, um sich vor und nach dem Zeitpunkt zu schließen, zu dem das Einlassventil (18, 19), das mit dem zweiten Zylinder verbunden ist, im normalen Betrieb des Verbrennungsmotors (2) geschlossen wird.

## Revendications

1. Procédé de commande d'un moteur à combustion interne à quatre temps, lequel moteur à combustion interne (2) comprend,
- au moins un premier et un second cylindre (C1, C4) ;
- un premier piston (P1) agencé dans le premier cylindre (C1) ;
- un second piston (P4) agencé dans le second cylindre (C4) ;
- un premier canal d'admission (39) et un second canal d'échappement (40) connecté au premier cylindre (C1),
- une première et une seconde soupape (18, 19), agencées pour ouvrir et fermer la connexion entre le premier canal (39) et le premier cylindre (C1),
- une troisième soupape (24) agencée pour ouvrir et fermer la connexion entre le second canal (40) et le premier cylindre (C1), où
le procédé comprend les étapes suivantes :
a) la commande de la première soupape (18) pour qu'elle s'ouvre à un point mort bas (BDC) du piston (P1) dans le premier cylindre (C1), entre une course de détente et une course d'échappement, et se ferme à un point mort haut (TDC) pour le piston (P1) dans le premier cylindre (C1), entre une course d'échappement et une course d'admission,
b) la commande de la seconde soupape (19) pour qu'elle s'ouvre lorsque la première soupape (18) se ferme et pour qu'elle se ferme au point mort bas (BDC) entre la course d'admission et sa course de compression, et
c) la commande la troisième soupape (24) de telle sorte que celle-ci, et donc la connexion entre le second canal (40) et le premier cylindre, reste fermée pendant toutes les courses du moteur (2), le procédé est
**caractérisé par** les étapes supplémentaires suivantes :
d) l'alimentation en carburant uniquement vers le second cylindre (C4),
e) la réduction de la masse d'air aspirée dans le second cylindre (C4) par rapport à la masse d'air aspirée dans le premier cylindre (C1).

2. Procédé selon la revendication 1, **caractérisé par le fait que** la première soupape (18) est commandée par un premier moyen de commande de soupape (21) et que la seconde soupape (19) est commandée par un second moyen de commande de soupape (22), lesdits premier et second moyens de commande de soupape (21, 22) pouvant être déphasés par rapport à l'angle de rotation d'un vilebrequin (16) connecté au piston (P1).

3. Procédé selon l'une quelconque des revendications 1 et 2, **caractérisé en ce que** à l'étape c), la troisième soupape (24) est commandée par un dispositif de désactivation (34) connecté à la troisième soupape (24).

4. Procédé selon les revendications 1 à 3, **caractérisé en ce qu'**une quatrième soupape (25) est agencée pour ouvrir et fermer la connexion entre le second canal (40) et le premier cylindre (C1), et **en ce que** dans l'étape c, la quatrième soupape (25) est également commandée avec le dispositif de désactivation (34), qui est également connecté à la quatrième soupape (25).

5. Procédé selon l'une quelconque des revendications 1 à 3, **caractérisé en ce que** le premier canal (39) est connecté à un système d'admission (20) agencé pour le moteur (2) et le second canal 40) est connecté à un système d'échappement (26) agencé dans le moteur (2).

6. Procédé selon l'une quelconque des revendications 1 à 3, **caractérisé en ce que** le premier canal est connecté à un système d'échappement (26) agencé pour le moteur (2), et le second canal (40) est connecté à un système d'admission (20) disposé dans le moteur (2).

7. Procédé selon la revendication 1, **caractérisé par le fait que**, lors de l'étape e), une soupape d'admission (18, 19) connectée au second cylindre est commandée pour réduire la masse d'air aspirée dans le second cylindre (C4).

8. Procédé selon la revendication 7, **caractérisé par le fait que** la soupape d'admission (18, 19), connectée au second cylindre, est commandée pour se fermer avant et après le moment où la soupape d'admission (18 , 19), connecté au second cylindre, est fermée lors du fonctionnement normal du moteur à combustion interne (2).
